# EUROPÄISCHE PATENTSCHRIFT

(11) **EP 1 728 002 B1**
(45) Veröffentlichungstag und Bekanntmachung des Hinweises auf die Patenterteilung: **09.12.2009**
(21) Anmeldenummer: 05715658.0
(22) Anmeldetag: 02.03.2005
(51) Int. Cl.: F16D 65/12

(54) **ZWISCHENELEMENTE FÜR EINE BREMSSCHEIBEN-/NABENKOMBINATION UND BREMSSCHEIBEN-/NABENKOMBINATION**
ADAPTER FOR A BRAKE DISC/HUB COMBINATION AND BRAKE DISC/HUB COMBINATION
ELEMENTS INTERMEDIAIRES POUR UNE COMBINAISON DISQUE DE FREIN/MOYEU ET COMBINAISON DISQUE DE FREIN/MOYEU

(30) Priorität: 12.03.2004 DE 102004012103
(43) Veröffentlichungstag der Anmeldung: 06.12.2006
(73) Patentinhaber: KNORR-BREMSE Systeme für Nutzfahrzeuge GmbH, 80809 München (DE)
(72) Erfinder: WIMMER, Josef, 94474 Vilshofen (DE); SCHROPP, Josef, 94428 Eichendorf (DE)
(74) Vertreter: Mattusch, Gundula
(86) Internationale Anmeldenummer: PCT/EP2005/002183
(87) Internationale Veröffentlichungsnummer: WO 2005/088151

(56) Entgegenhaltungen:
- DE-A1- 19 918 069

## Beschreibung

Die vorliegende Erfindung betrifft eine Bremsseheiben-/Nabenkombination gemäß dem Oberbegriff des Anspruches 1.

Eine Bremsscheiben-/Nabenkombination mit einer innen belüfteten Bremsscheibe, gemäß dem Oberbegriff des Anspruchs 1, ist aus der DE 199 18 069 A1 bekannt. Darin ist eine Verbindung der Bremsscheibe mit einer Bremsscheibennabe mittels der Zwischenelemente beschrieben, über die eine Übertragung des Bremsmomentes von der Bremsscheibe auf die Bremsscheibennabe erfolgt, wobei die Zwischenelemente mit einem Schenkel an einem zugeordneten Abstützelement der Bremsscheibe und mit dem anderen Schenkel an einem Nocken der Bremsscheibennabe anliegen.

Die aus dieser Druckschrift bekannten Zwischenelemente weisen zwei glattflächige, parallel zueinander verlaufende und in Funktionsstellung aneinanderliegende Schenkel auf, die durch Faltung eines Blechstreifens gebildet sind.

Prinzipiell hat sich diese bekannte Konstruktion bewährt, jedoch kann sich eine Demontage der Zwischenelemente unter Umständen etwas schwierig gestalten, da z. B. durch Korrosion an den Abstützelementen der Bremsscheibe und/oder den Nocken der Bremsscheibennabe ein relativ hoher Kraftaufwand beim Ausdrücken der Zwischenelemente erforderlich ist, und zwar über den gesamten Ausdrückweg.

Auch ein Schrumpfen der Bremsscheibe kann zu einer Verspannung der Zwischenelemente führen, durch die ein Lösen aus diesem undefinierten Presssitz nur mit einem entsprechenden Aufwand möglich ist.

Der vorliegenden Erfindung liegt daher die Aufgabe zugrunde, mit konstruktiv einfachen Mitteln die Zwischenelemente einer Bremsscheiben-/Nabenkombination so weiter zu entwickeln, dass auch unter erschwerten Bedingungen deren einfache Demontage möglich ist.

Diese Aufgabe wird durch eine Bremsscheiben-/Nabenkombination gelöst, die die Merkmale des Anspruches 1 aufweist.

Durch die Möglichkeit, die Gesamtdicke der aneinanderliegenden Schenkel der Zwischenelemente zur Demontage zu verringern, wird der für eine optimale Bremsmomentenübertragung wichtige Presssitz der montierten Zwischenelemente beseitigt, so dass diese hinderungsfrei demontiert werden können. Dabei wird auch eine Verbackung der Zwischenelemente mit den anliegenden Abstützelementen bzw. den Nocken durch Korrosion praktisch aufgesprengt, so dass sich die Demontageprobleme, wie zum Stand der Technik beschrieben, nicht mehr ergeben.

Dabei sind auch die daraus resultierenden Vorteile vor allem auch hinsichtlich einer Kostenminimierung besonders bemerkenswert, da ein Austausch von Verschleißteilen der Scheibenbremse ungehindert und in kürzester Zeit erfolgen kann.

Zur Kostenminimierung trägt neben der vereinfachten Demontage der Zwischenelemente auch deren preiswerte Herstellung bei, da diese als Stanzteile einfach zu fertigen sind. Insbesondere aufgrund der großen Stückzahlen, in denen die Zwischenelemente zum Einsatz kommen, ist dieser Sachverhalt von besonderer Bedeutung.

Nach einer vorteilhaften Weiterentwicklung der Erfindung ist vorgesehen, dass die Gesamtdickenverringerung der aneinanderliegenden Schenkel durch Vorsprünge und Ausnehmungen erfolgt, die in Funktionsstellung des Zwischenelementes zueinander außer Eingriff sind, zum Lösen des Zwischenelementes jedoch derart zueinander verschoben werden, dass sie in Deckung miteinander liegen, wobei die Vorsprünge in ihren Grundflächenabmaßen zumindest geringfügig kleiner sind als die zugeordneten Ausnehmungen. Hierdurch tauchen nach einem achsparallelen Verschieben der Schenkel die Vorsprünge in die Ausnehmungen ein, während sie außerhalb des Eingriffs als Abstandshalter fungieren.

Diese abständige Lage der Schenkel zueinander entspricht der Einbaulage, in der die Zwischenelemente unter Spannung an den Nocken der Bremsscheibennabe bzw. den Abstützelementen der Bremsscheibe anliegen.

Zum Lösen dieser Spannung zur Entfernung der Zwischenelemente reicht eine kurze Relativbewegung des einen Schenkels zum anderen, durch den die genannte Spannung abgebaut wird und das Zwischenelement leicht entnehmbar ist.

Die Herstellung der Ausnehmungen und Vorsprünge kann sehr einfach erfolgen, beispielsweise durch Einstanzen von Sicken, durch die einerseits die Vorsprünge und andererseits die Ausnehmungen gebildet werden.

Denkbar ist die Zwischenelemente ein- oder zweiteilig auszubilden, wobei die Ausnehmungen durchaus durchgängig sein können, d. h. als Durchgangsöffnungen vorliegen.

Die Form der miteinander korrespondierenden Ausnehmungen und Vorsprünge ist prinzipiell frei wählbar. Entscheidend ist, dass sie in Verschieberichtung des einen Schenkels zum anderen in Funktionsstellung der Zwischenelemente hintereinander angeordnet sind und in ihrer Umfangskontur in etwa einander entsprechen.

Vorteilhafte Weiterbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Fig. 1: eine erfindungsgemäße Bremsscheiben-/Nabenkombination in einer Explosivdarstellung;
- Fig. 2: ein Beispiel eines Zwischenelementes in einer perspektivischen Ansicht;
- Fig. 3: das Zwischenelement nach Figur 2 als Sprengbild
- Fig. 4 - 8: jeweils ein weiteres Ausführungsbeispiel eines Zwischenelementes in perspektivischer Darstellung.

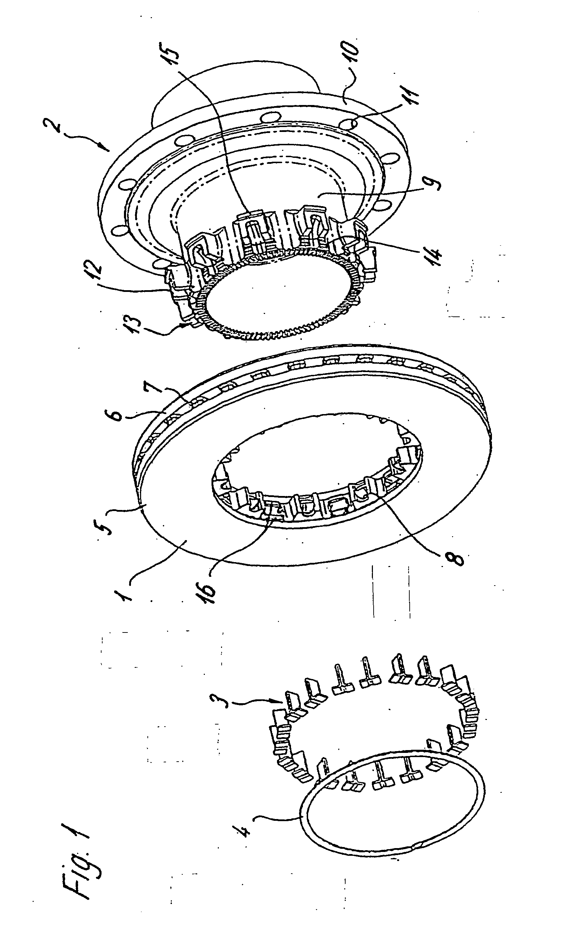

In der Fig. 1 ist eine Bremsscheiben-/Nabenkombination dargestellt, die eine Bremsscheibe 1 und eine Bremsscheibennabe 2 aufweist, die gleichzeitig auch als Radnabe ausgebildet sein kann oder auf eine separate hohlzylindrische Radnabe aufschiebbar. Die innen belüftete Bremsscheibe 1 weist zwei Reibringe 5, 6 auf, die über Stege 7 miteinander verbunden sind.

Zur Drehmomentenübertragung sind am Innenumfang der Bremsscheibe 1 sich radial nach innen erstreckende, abständig zueinander angeordnete und gleichmäßig über den Umfang verteilte Abstützelemente 8 angeformt.

Die Radnabe 2 weist einen hohlzylindrischen, topfartigen Abschnitt 9 auf, an dem sich an einem Ende eine Scheibe 10 anschließt, die mit Bohrungen 14 versehen ist.

Das der Scheibe 10 abgewandte Ende 13 des Abschnitts 9 weist über dem Außenumfang verteilte, radial nach außen vorstehende Nocken 12 auf.

Die Bremsscheibe 1 ist auf die Bremsscheibennabe 2 axial aufschiebbar, wobei die Nocken 12 und die Abstützelemente 8 in Umfangsrichtung ineinander greifen.

Dabei sind zwischen den Nocken 12 und den Abstützelementen 8 Zwischenräume gebildet, in die Zwischenelemente 3 eingeschoben werden.
Das bei einer Bremsung wirksam werdende Bremsmoment wird von dem Abstützelement 8 der Bremsscheibe 1 über die Zwischenelemente 3 auf die Nocken 12 der Bremsscheibennabe 2 übertragen.

Eine axiale Sicherung der Bremsscheibe 1 auf der Bremsscheibennabe 2 bzw. dem Abschnitt 9 erfolgt auf der der Scheibe 10 zugewandten Seite durch an den Nocken angeformte, radial nach außen gerichtete Ansätze 15, an denen radial nach innen gerichtete Anschläge 16 der Bremsscheibe 1 anliegen.

Zur gegengerichteten Sicherung der Bremsscheibe 1 ist hier ein Sicherungsring 4 vorgesehen, der in Ringnuten 14 einliegt, die umlaufend in den Nocken 12 angeordnet ist. Im übrigen sichert der Sicherungsring 4 die eingelegten Zwischenelemente 3 gegen eine axiale Verschiebung.

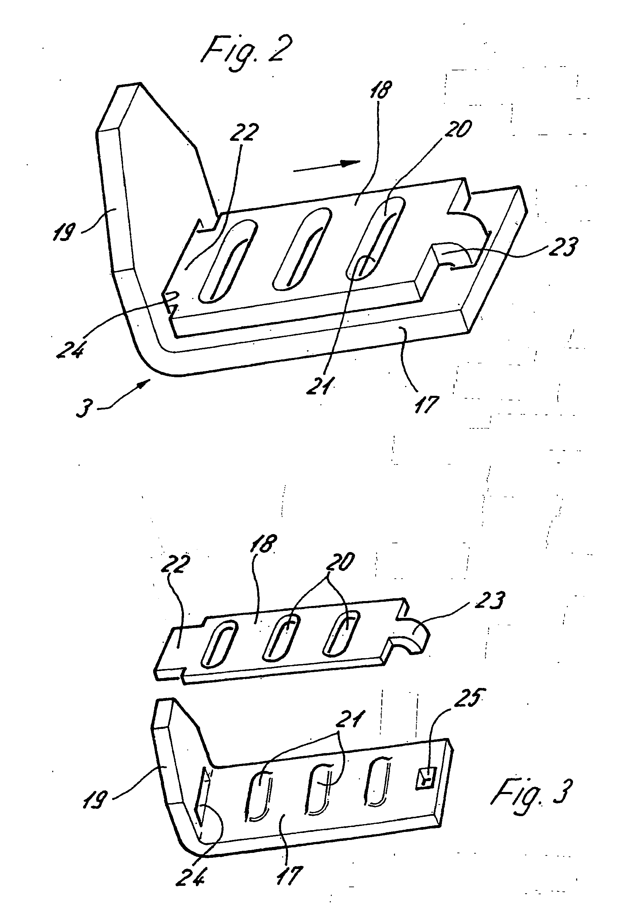

In den Figuren 2 und 4 bis 7 sind unterschiedliche Ausführungsvarianten von Zwischenelementen 3 dargestellt, die jeweils zwei parallel zueinander verlaufende, aneinanderliegende Schenkel 17, 18 aufweisen.

Das in den Figuren 2 und 3 gezeigte Ausführungsbeispiel eines Zwischenelementes 3 ist zweiteilig ausgebildet, d. h. die beiden Schenkel 17, 18 sind stofflich nicht miteinander verbunden. Dies ist insbesondere in der Fig. 3 sehr deutlich zu erkennen. Hier ist auch zu sehen, dass der Schenkel mehrere Ausnehmungen 20 in Form von langlochförmigen Durchgangsöffnungen aufweist, während der Schenkel 17 mit Vorsprüngen 21 versehen ist, die in Richtung des Schenkels 18 erhaben ausgebildet sind.

In Gebrauchsstellung, also wenn das Zwischenelement 3 in die zwischen dem zugeordneten Nocken 12 und das Abstützelement 8 gebildeten Zwischenraum eingefügt ist, liegt die Unterseite des Schenkels 18 außerhalb der Ausnehmungen 20 auf den Vorsprüngen 21 auf. Durch Verschieben des Schenkels 18 relativ zum Schenkel 17 in die durch den Pfeil in Fig. 2 gekennzeichnete Richtung, gelangen die Ausnehmungen 20 mit den Vorsprüngen 21 so in Deckung, dass die Vorsprünge 21 in die Ausnehmungen 20 eingreifen, so dass die Vorsprünge 21 keine Auflage mehr bilden, sondern die beiden Grundflächen der Schenkel 17, 18 unmittelbar aufeinander liegen.

Wie erkennbar ist, verringert sich die Gesamtdicke der Schenkel 17, 18 um die Eintauchhöhe der Vorsprünge 21 in die Ausnehmungen 20, so dass der genannte Zwischenraum, in dem das Zwischenelement 3 montiert einliegt, in seiner Breite dann größer ist als die Gesamtdicke der beiden Schenkel 17, 18. Somit lässt sich das soweit maßlich veränderte Zwischenelement 3 problemlos entfernen.

Zur Montageerleichterung weist der Schenkel 18 an einem Ende eine zum Schenkel 17 hin gerichtete Nase 23 auf, die in eine Nasenöffnung 25 des Schenkels 17 eingreift, wobei jedoch in Verschieberichtung des Schenkels 18 so viel Spiel vorgesehen ist, dass eine relative Verschiebung des Schenkels 18 gegenüber dem Schenkel 17 problemlos möglich ist.

In einem sich an den Schenkel 17 anschließenden Winkelteil 19 ist eine Einschuböffnung 24 vorgesehen, in die eine Zunge 22 des Schenkels 18 eingreift. Durch ein geeignetes Werkzeug kann auf den Schenkel 22 ein Verschiebedruck ausgeübt werden, so dass der Schenkel 18 in Pfeilrichtung aus einer Gebrauchs- in eine Nichtgebrauchsstellung verschiebbar ist. Im übrigen sind sowohl die Ausnehmungen 20 wie auch die Vorsprünge 21 in ihrer länglichen Form quer zur Verschieberichtung verlaufend.

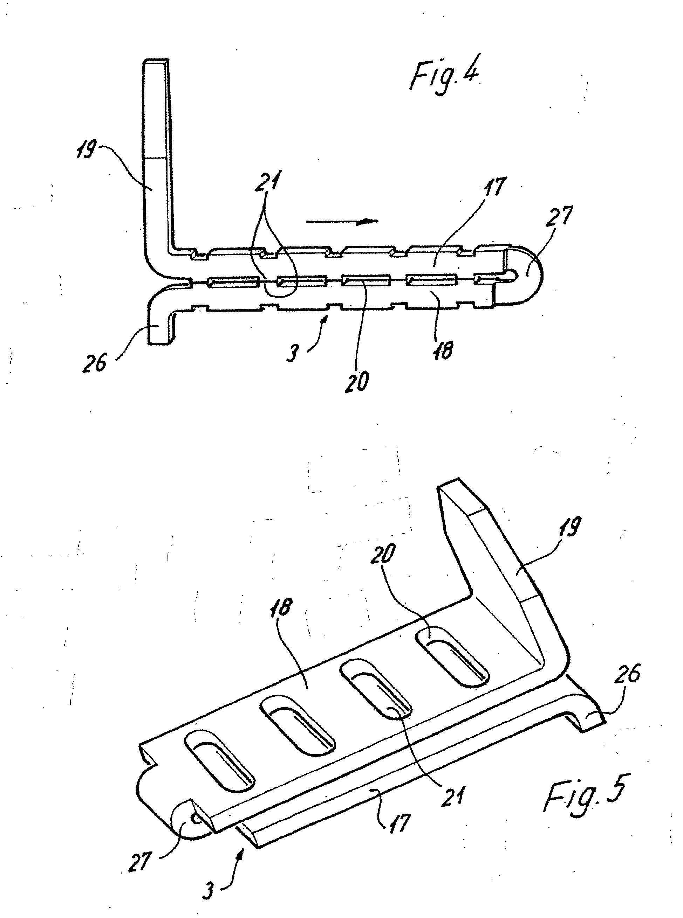

In der Fig. 4 ist das Zwischenelement 3 als einteiliges Bauteil dargestellt, bei dem die beiden parallelen Schenkel 17, 18 durch ein Verbindungsstück 27 stofflich miteinander verbunden sind bzw. aufeinander gefaltet sind. Die Herstellung des Zwischenelementes 3 bzw. die Verformung der Schenkel 17, 18 kann durch eine Faltung o.dgl. eines Blechstreifens erfolgen.

Das Verbindungsstück 27 weist vorzugsweise eine geringere Breite als die beiden Schenkel 17, 18 auf, damit eine leichtere Verschiebbarkeit der Schenkel aneinander gegeben ist.

Hierbei weist jeder Schenkel 17, 18 Vorsprünge 21 auf, die in der dargestellten Gebrauchsposition direkt aufeinander liegen. Benachbart zu den Vorsprüngen 21 sind die Ausnehmungen 20, die praktisch durch die Herstellung der Vorsprünge 21 gebildet sind und die in Form von Sicken vorzugsweise geprägt sind.

Durch Krafteinwirkung auf das Winkelteil 19 des Schenkels 17 oder ein entgegengesetzt gerichtetes Winkelteil 26 des Schenkels 18 wird zur Demontage des Zwischenelementes 3 eine relative Verschiebung der Schenkel 17, 18 zueinander erreicht, unter Verformung des Verbindungsstückes 27, so dass sich die Vorsprünge 21 aus ihrem gemeinsamen Überdeckungsbereich fortbewegen, bis sie in einen Bereich jeweils in Deckung mit einer Ausnehmung 20 gelangen und darin eintauchen, wodurch sich die Gesamtdicke der beiden aneinanderliegenden Schenkel 17, 18 verringert.

Dies ist gleichermaßen bei dem Ausführungsbeispiel eines Zwischenelementes entsprechend der Figur 5 der Fall, das hinsichtlich der Anordnung und Formgebung der Ausnehmungen 20 bzw. der Vorsprünge 21 denen in den Figuren 2 und 3 entspricht, während die beiden Schenkel 17, 18 ebenfalls durch ein deformierbares Verbindungsstück 27 einstückig miteinander verbunden sind.

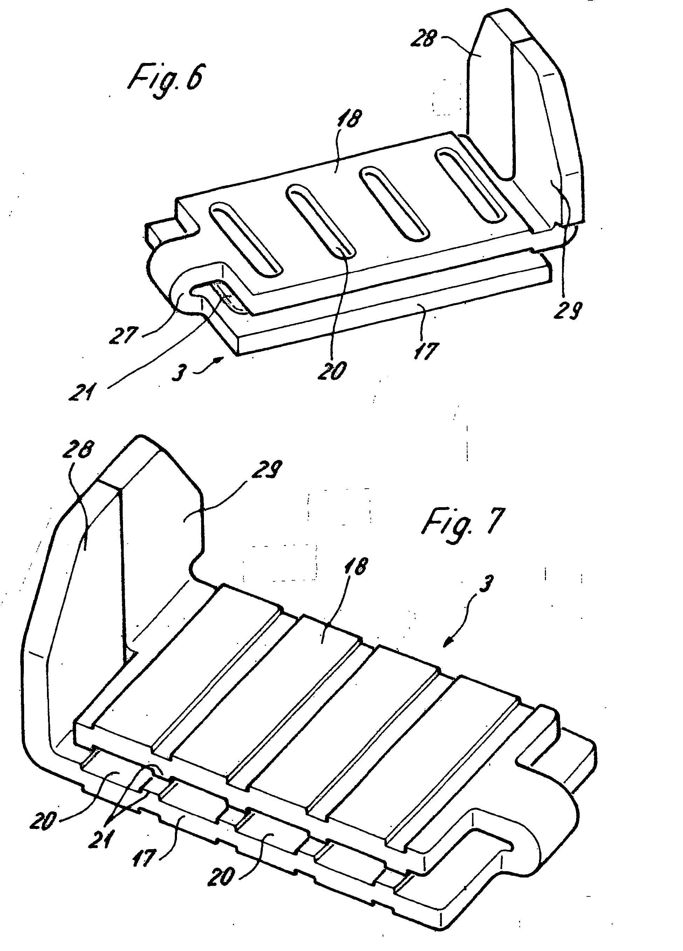

Die in den Figuren 6 und 7 gezeigten weiteren Ausführungsbeispiele eines Zwischenelementes 3 sind ebenso wie die in den Figuren 4 und 5 dargestellten als einteiliges Bauteil ausgebildet, wobei die Schenkel 17, 18 des Zwischenelementes 3 nach Figur 6 in ihrer Konfiguration denen der Figur 5 entsprechen und nach Figur 7 denen gemäß Figur 4.

In beiden Fällen schließen sich an die Schenkel 17, 18, an der dem Verbindungsstück 27 gegenüberliegenden Seite, Winkelteile 28, 29 an, die gleichgerichtet und parallel zueinander verlaufen, wobei jedes Winkelteil 28, 29 in seiner Breite etwa der Breite des benachbarten Winkelteiles entspricht und gemeinsam der Gesamtbreite des Zwischenelementes.

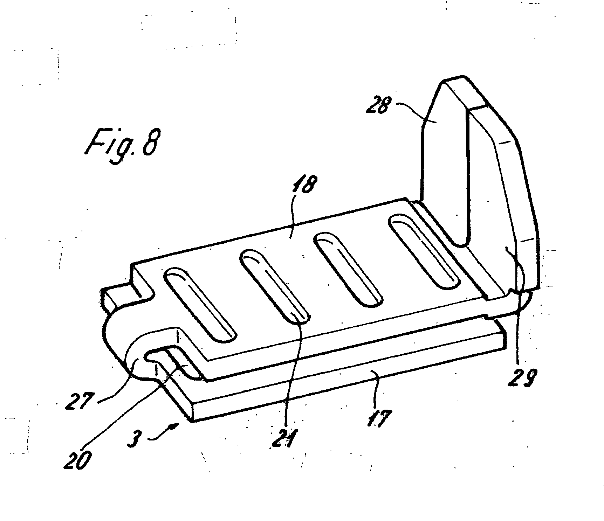

In der Figur 8 ist ein Zwischenelement gezeigt, das in seinem Grundaufbau dem der Figur 6 entspricht, das heißt, es schließen sich an die Schenkel 17, 18 gleichgerichtete und parallel zueinander verlaufende Winkelteile 28, 29 an. Im Unterschied zu dem Ausführungsbeispiel nach Figur 6 sind die Ausnehmungen 20 in dem, bezogen auf die Erstreckungsrichtung der Winkelteile 28, 29 unteren Schenkel 17 vorgesehen, während die Vorsprünge 21 durch Ausprägen in den oberen Schenkel 18 eingebracht sind und zum unteren Schenkel 17 hin vorstehen. Zu erkennen sind in der Figur 8 lediglich die Sicken die beim Ausprägen der Vorsprünge 21 entstehen.

### Bezugszeichenliste

- 1: Bremsscheibe
- 2: Bremsscheibennabe
- 3: Zwischenelement
- 4: Sicherungsring
- 5: Reibring
- 6: Reibring
- 7: Steg
- 8: Abstützelement
- 9: Abschnitt
- 10: Scheibe
- 11: Bohrung
- 12: Nocken
- 13: Ende
- 14: Ringnut
- 15: Ansatz
- 16: Anschlag
- 17: Schenkel
- 18: Schenkel
- 19: Winkelteil
- 20: Ausnehmung
- 21: Vorsprung
- 22: Zunge
- 23: Nase
- 24: Einschuböffnung
- 25: Nasenöffnung
- 26: Winkelteil
- 27: Verbindungsstück
- 28: Winkelteil
- 29: Winkelteil

## Patentansprüche

1. Bremsscheiben-/Nabenkombination mit einer Scheiben-/Nabenverbindung zur Verbindung einer Bremsscheibe (1) mit einer Bremsscheibennabe (2), mit folgenden Merkmalen:
a) die Bremsscheibe (1) weist am inneren Umfang Abstützelemente (8) auf,
b) die Bremsscheibennabe (2) ist am äußeren Umfang mit Nocken (12) versehen,
c) radial zwischen der Bremsscheibennabe (2) und der Bremsscheibe (1) sind in Umfangsrichtung Zwischenelemente (3) verteilt, die in sich zwischen den Nocken (12) und den Abstützelementen (8) in Umfangsrichtung erstreckende Zwischenräume ragen und damit eine Übertragung des Bremsmomentes von der Bremsscheibe (1) auf die Bremsscheibennabe (2) gewährleisten,
d) jedes Zwischenelement (3) weist zwei zumindest ganz oder im wesentlichen parallel zueinander verlaufende Schenkel (17, 18) auf, wobei an einem Schenkel (17, 18) ein zugeordneter Nocken (12) und am anderen Schenkel (17, 18) ein zugeordnetes Abstützelement (8) anliegt,
**dadurch gekennzeichnet, dass**
e) die Gesamtdicke der aneinanderliegenden Schenkel (17, 18) der Zwischenelemente (3) zu deren Demontage verringerbar ist.

2. Bremsscheiben-/Nabenkombination nach Anspruch 1, **dadurch gekennzeichnet, dass** die Schenkel (17, 18) jeweils mit Vorsprüngen (21) bzw. mit Ausnehmungen (20) versehen sind, die in Nichtgebrauchsstellung des Zwischenelementes ineinander greifen.

3. Bremsscheiben-/Nabenkombination nach Anspruch 1 oder 2, **dadurch gekennzeichnet, dass** die Schenkel (17, 18) relativ zueinander achsparallel verschiebbar sind.

4. Bremsscheiben-/Nabenkombination nach Anspruch 2, **dadurch gekennzeichnet, dass** die Vorsprünge (21) des einen Schenkels (17) in Gebrauchsstellung des Zwischenelementes (3) an der Grundfläche des anderen Schenkels (18) außerhalb der Ausnehmungen (20) anliegen.

5. Bremsscheiben-/Nabenkombination nach Anspruch 2, **dadurch gekennzeichnet, dass** die Ausnehmungen (20) und Vorsprünge (21) als Sicken ausgebildet sind.

6. Bremsscheiben-/Nabenkombination nach Anspruch 2, **dadurch gekennzeichnet, dass** das Grundrissabmaß jeder Ausnehmung (20) zumindest geringfügig größer ist als das Grundrissabmaß des zugeordneten Vorsprungs (21).

7. Bremsscheiben-/Nabenkombination nach Anspruch 2, **dadurch gekennzeichnet, dass** die Ausnehmungen (20) langlochförmig ausgebildet sind und die Vorsprünge (21) in ihrer Kontur daran angepasst sind.

8. Bremsscheiben-/Nabenkombination Anspruch 2, **dadurch gekennzeichnet, dass** die Längserstreckung der Ausnehmungen (20) bzw. Vorsprünge (21) quer zur relativen Verschieberichtung der Schenkel (17, 18) verläuft.

9. Bremsscheiben-/Nabenkombination nach einem der vorhergehenden Ansprüche, **dadurch gekennzeichnet, dass** die Schenkel (17, 18) als separate Teile ausgebildet sind.

10. Bremsscheiben-/Nabenkombination nach einem der vorhergehenden Ansprüche, **dadurch gekennzeichnet, dass** die Schenkel (17, 18) durch ein Verbindungsstück (27), insbesondere einer Faltung, einstückig miteinander verbunden sind.

11. Bremsscheiben-/Nabenkombination nach einem der vorhergehenden Ansprüche, **dadurch gekennzeichnet, dass** bei zweiteiliger Ausbildung der Schenkel (17, 18) der Schenkel (18) eine Nase (23) aufweist, die in eine Nasenöffnung (25) des anderen Schenkels (17) eingreift.

12. Bremsscheiben-/Nabenkombination nach Anspruch 11, **dadurch gekennzeichnet, dass** die Nasenöffnung (25) entsprechend dem relativen Verschiebeweg des Schenkels (18) zum Schenkel (17) weiter ist als die Nase (23).

13. Bremsscheiben-/Nabenkombination nach einem der Anspruch 11 oder 12, **dadurch gekennzeichnet, dass** der Schenkel (18) des zweiteiligen Zwischenelementes (3) auf seiner der Nase (23) abgewandten Seite eine Zunge (22) aufweist, die in eine Einschuböffnung (24) des Schenkels (17) bzw. eines daran angeformten Winkelteiles (19) einliegt.

14. Bremsscheiben-/Nabenkombination nach einem der Ansprüche 2, 4-8, **dadurch gekennzeichnet, dass** in Gebrauchsstellung zwei sich gegenüberliegende Vorsprünge (21) der Schenkel (17, 18) aneinander liegen.

15. Bremsscheiben-/Nabenkombination nach einem der Ansprüche 2, 4-8, **dadurch gekennzeichnet, dass** die aneinanderliegenden Vorsprünge (21) benachbarte Ausnehmungen (20) begrenzern.

16. Bremsscheiben-/Nabenkombination nach einem der vorhergehenden Ansprüche, **dadurch gekennzeichnet, dass** jeder Schenkel (17, 18) an den einander benachbarten Enden ein Winkelteil (19, 26, 28, 29) aufweist, dass sich vorzugsweise rechtwinklig zum zugeordneten Schenkel (17, 18) erstreckt.

17. Bremsscheiben-/Nabenkombination nach Anspruch 16, **dadurch gekennzeichnet, dass** die Winkelteile (19, 26) entgegengesetzt gerichtet verlaufen.

18. Bremsscheiben-/Nabenkombination nach einem der Ansprüche 16 oder 17, **dadurch gekennzeichnet, dass** die Winkelteile (28, 29) gleichgerichtet verlaufen.

19. Bremsscheiben-/Nabenkombination nach einem der Ansprüche 16-18, **dadurch gekennzeichnet, dass** die Winkelelemente (28, 29) in ihrer Breite jeweils etwa der halben Breite der zugeordneten Schenkel (17,18) entsprechen.

20. Bremsscheiben-/Nabenkombination nach einem der Ansprüche 2, 4-8, 14, 15 in Kombination mit den Ansprüchen 16-19, **dadurch gekennzeichnet, dass** bei gleichgerichtet verlaufenden Winkelteilen (28, 29) die Vorsprünge (21) in dem, bezogen auf die Winkelteile (28, 29) oberen Schenkel (18) und die Ausnehmungen (20) in dem unteren Schenkel (17) vorgesehen sind.

## Claims

1. A brake-disc/hub combination having a brake-disc/hub connection for connecting a brake disc (1) to a brake disc hub (2), having the following characteristics:
a) the brake disc (1) has support elements (8) at the inner periphery,
b) the brake disc hub (2) is provided with cams (12) at the outer circumference,
c) intermediate elements (3) are distributed in the peripheral direction radially between the brake disc hub (2) and the brake disc (1), whic intermediate elements (3) protrude into intermediate spaces extending in the peripheral direction between the cams (12) and the support elements (8) and therefore ensure transmission of the braking torque from the brake disc (1) to the brake disc hub (2),
d) each intermediate element (3) has two legs (17, 18) which run at least entirely or substantially parallel to one another, wherein an associated cam (12) bears against one leg (17, 18) and an associated support element (8) bears against the other leg (17, 18),
**characterized in that**
e) the overall thickness of the legs (17, 18) bearing against one another of the intermediate elements (3) can be reduced in order to disassemble them.

2. The brake-disc/hub combination according to claim 1, **characterized in that** the legs (17, 18) are respectively provided with projections (21) or with recesses (20) which engage one another in the non-use position of the intermediate element.

3. The brake-disc/hub combination according to claim 1 or 2, **characterized in that** the legs (17, 18) are displaceable relative to one another in an axially parallel fashion.

4. The brake-disc/hub combination according claim 2, **characterized in that**, in the use position of the intermediate element (3), the projections (21) of one leg (17) bear against the base face of the other leg (18) outside the recesses (20).

5. The brake-disc/hub combination according to claim 2, **characterized in that** the recesses (20) and projections (21) are formed as beads.

6. The brake-disc/hub combination according claim 2, **characterized in that** the outline dimension of each recess (20) is at least slightly larger than the outline dimension of the associated projection (21).

7. The brake-disc/hub combination according to claim 2, **characterized in that** the recesses (20) are formed in the shape of slots, and the projections (21) are matched thereto in their contour.

8. The brake-disc/hub combination according to claim 2, **characterized in that** the longitudinal extension of the recesses (20) or projections (21) runs transversely with respect to the relative displacement direction of the legs (17, 18).

9. The brake-disc/hub combination according to one of the preceding claims, **characterized in that** the legs (17, 18) are formed as separate parts.

10. The brake-disc/hub combination according to one of the preceding claims, **characterized in that** the legs (17, 18) are integrally connected to one another by means of a connecting piece (27), in particular a fold.

11. The brake-disc/hub combination according to one of the preceding claims, **characterized in that**, in the case of the legs (17, 18) being formed in two parts, the leg (18) has a lug (23) which engages a lug opening (25) of the other leg (17).

12. The brake-disc/hub combination according to claim 11, **characterized in that** the lug opening (25) is wider than the lug (23) to an extent corresponding to the displacement path of the leg (18) relative to the leg (17).

13. The brake-disc/hub combination according to one of claims 11 or 12, **characterized in that** the leg (18) of the two-part intermediate element (3) has a tongue (22) on its side turned away from the lug (23), the tongue (22) being situated in an insertion opening (24) of the leg (17) or of an angle part (19) integrally formed thereon.

14. The brake-disc/hub combination according to one of claims 2, 4 -8, **characterized in that**, in the use position, two opposite projections (21) of the legs (17, 18) bear against one another.

15. The brake-disc/hub combination according to one of claims 2, 4 -8, **characterized in that** the projections (21) which bear against one another delimit adjacent recesses (20).

16. The brake-disc/hub combination according to one of the preceding claims, **characterized in that** each leg (17, 18) has, at the ends which are adjacent to one another, an angle part (19, 26, 28, 29), which preferably extends at right angles to the associated leg (17, 18).

17. The brake-disc/hub combination according to claim 16, **characterized in that** the angle parts (19, 26) run in opposite directions.

18. The brake-disc/hub combination according to one of claims 16 or 17, **characterized in that** the angle parts (28, 29) run in the same direction.

19. The brake-disc/hub combination according to one of claims 16 - 18, **characterized in that** the width of the angle elements (28, 29) corresponds to approximately half of the width of the associated leg (17, 18).

20. The brake-disc/hub combination according to one of claims 2, 4 -8, 14, 15 in combination with the claims 16 -19, **characterized in that,** in the case of angle parts (28, 29) which run in the same direction, the projections (21) are provided in the upper leg (18) relative to the angle parts (28, 29), and the recesses (20) are provided in the lower leg (17).

## Revendications

1. Combinaison disque de frein/moyeu ayant une liaison disque/moyeu pour la liaison d'un disque (1) de frein à un moyeu (2) de disque de frein, ayant les caractéristiques suivantes :
a) le disque (1) de frein a des éléments (8) d'appui sur le pourtour intérieur,
b) le moyeu (2) de disque de frein est pourvu de bossages (12) sur le pourtour extérieur,
c) sont répartis radialement, entre le moyeu (2) de disque de frein et le disque (1) de frein dans la direction du pourtour, des éléments (3) intermédiaires qui pénètrent dans des espaces intermédiaires s'étendant entre les bossages (12) et les éléments (8) d'appui et assurent ainsi une transmission du couple de freinage du disque (1) de frein au moyeu (2) de disque de frein,
d) chaque élément (3) intermédiaire à deux branches (17, 18) s'étendant au moins entièrement ou sensiblement parallèlement l'une, à l'autre, un bossage (12) associé s'appliquant à l'une des branches (17, 18) et un élément (8) d'appui associé s'appliquant à l'autre branche (17, 18),
**caractérisée en ce que**
e) l'épaisseur globale des branches (17, 18) reposant l'une sur l'autre des éléments (3) intermédiaires peut être diminuée pour leur montage.

2. Combinaison disque de frein/moyeu suivant la revendication 1, **caractérisée en ce que** les branches (17, 18) sont munies respectivement de saillies (21) ou d'évidements (20) qui, en la position de non utilisation de l'élément intermédiaire, pénètrent les unes dans les autres.

3. Combinaison disque de frein/moyeu suivant la revendication 1 ou 2, **caractérisée en ce que** les branches (17, 18) peuvent coulisser l'une par rapport à l'autre parallèlement à l'axe.

4. Combinaison disque de frein/moyeu suivant la revendication 2, **caractérisée en ce que** les saillies de l'une des branches (17) s'applique en la position de fonctionnement de l'élément (3) intermédiaire à la surface de base de l'autre branche (18) en dehors des évidements (20).

5. Combinaison disque de frein/moyeu suivant la revendication 2, **caractérisée en ce que** les évidements (20) et les saillies (21) sont constitués en nervures.

6. Combinaison disque de frein/moyeu suivant la revendication 2, **caractérisée en ce que** la dimension de contour de base de chaque évidement (20) est plus grande au moins légèrement que la dimension de contour de base de la saillie (21) associée.

7. Combinaison disque de frein/moyeu suivant la revendication 2, **caractérisée en ce que** les évidements (20) sont en forme de boutonnière et le contour des saillies (21) leur est adapté.

8. Combinaison disque de frein/moyeu suivant la revendication 2, **caractérisée en ce que** l'étendue longitudinale des évidements (20) ou des saillies (21) s'étend transversalement à la direction relative de déplacement des branches (17, 18).

9. Combinaison disque de frein/moyeu suivant l'une des revendications précédentes, **caractérisée en ce que** les branches (17, 18) sont constituées sous la forme de pièces distinctes.

10. Combinaison disque de frein/moyeu suivant l'une des revendications précédentes, **caractérisée en ce que** les branches (17, 18) sont reliées entre elles d'un seul tenant par une pièce (27) de liaison, notamment par une pliure.

11. Combinaison disque de frein/moyeu suivant l'une des revendications précédentes, **caractérisée en ce que**, pour une constitution en deux parties des branches (18), la branche (18) a un bec (23) qui pénètre dans une ouverture (25) de bec de l'autre branche (17).

12. Combinaison disque de frein/moyeu suivant la revendication 11, **caractérisée en ce que** l'ouverture (25) de bec est, conformément au trajet de déplacement relatif de la branche (18) par rapport à la branche (17), plus loin que le bec (23).

13. Combinaison disque de frein/moyeu suivant l'une des revendications 11 ou 12, **caractérisée en ce que** la branche (18) de l'élément (3) en deux parties a, du côté éloigné du bec (23), une languette (22) qui pénètre dans une ouverture (24) d'insertion de la branche (17) ou d'une partie (19) coudée qui y est formée.

14. Combinaison disque de frein/moyeu suivant l'une des revendications 2, 4 à 8, **caractérisée en ce qu'**en position d'utilisation, deux saillies (21) opposées des branches (17, 18) sont l'une contre l'autre.

15. Combinaison disque de frein/moyeu suivant l'une des revendications 2, 4 à 8, **caractérisée en ce que** les saillies (21) disposées l'une contre l'autre délimitent des évidements (20) voisins.

16. Combinaison disque de frein/moyeu suivant l'une des revendications précédentes, **caractérisée en ce que** chaque branche (17, 18) a, aux extrémités voisines l'une de l'autre, une partie (19, 26, 28, 29) coudée qui s'étend de préférence perpendiculairement à la branche (17, 18) associée.

17. Combinaison disque de frein/moyeu suivant la revendication 16, **caractérisée en ce que** les parties (19, 26) coudées s'étendent en sens contraire.

18. Combinaison disque de frein/moyeu suivant l'une des revendications 16 ou 17, **caractérisée en ce que** les parties (28, 29) coudées s'étendent dans le même sens.

19. Combinaison disque de frein/moyeu suivant l'une des revendications 16 à 18, **caractérisée en ce que** les éléments (28, 29) coudés correspondent dans leur largeur respectivement à peu près à la demi-largeur de la branche (17, 18) associée.

20. Combinaison disque de frein/moyeu suivant l'une des revendications 2, 4 à 8, 14, 15, en combinaison avec les revendications 16 à 19, **caractérisée en ce que,** pour des parties (28, 29) coudées s'étendant dans le même sens, les saillies sont prévues dans la branche (18) supérieure rapportée aux parties (28, 29) coudées et les évidements (20) dans la branche (17) inférieure.
